**Europäisches Patentamt**

**European Patent Office**

**Office européen des brevets**

(11) Publication number: **0 097 404**
**B1**

# EUROPEAN PATENT SPECIFICATION

(45) Date of publication of patent specification: **22.04.87**

(51) Int. Cl.⁴: **H 02 K 26/00, H 02 K 1/06**

(21) Application number: **83200901.3**

(22) Date of filing: **20.06.83**

(54) A motor arrangement comprising four coneshaped motors.

(30) Priority: **23.06.82 SE 8203884**

(43) Date of publication of application:
**04.01.84 Bulletin 84/01**

(45) Publication of the grant of the patent:
**22.04.87 Bulletin 87/17**

(84) Designated Contracting States:
**DE FR GB SE**

(56) References cited:
**EP-A-0 046 310**
**US-A-3 396 288**

(73) Proprietor: **Philips Norden AB**
**Tegeluddsvägen 1**
**S-11584 Stockholm (SE)**

(84) **SE**

(73) Proprietor: **N.V. Philips' Gloeilampenfabrieken**
**Groenewoudseweg 1**
**NL-5621 BA Eindhoven (NL)**

(84) **DE FR GB**

(72) Inventor: **Flogvall, Anders Gustav**
**c/o INT. OCTROOIBUREAU B.V. Prof. Holstlaan 6**
**NL-5656 AA Eindhoven (NL)**

(74) Representative: **Gorter, Willem Karel et al**
**INTERNATIONAAL OCTROOIBUREAU B.V. Prof.**
**Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a motor arrangement comprising four electric motors, each comprising a stator having a substantially rotary symmetrical body and a rotor, the axes of rotation of the motors being substantially arranged in a common plane and being so mutually positioned that the motors are arranged in two pairs, with the axes of the motors in each pair being colinear and the axes of the two pairs intersecting each other at right angles. The invention also relates to the use of such motor arrangements in missiles.

Arrangements of this type and comprising four conventional torque motors are previously known. With a conventional motor in this case is meant a motor having a cylinder-shaped rotor and a stator adapted thereto. A motor arrangement consisting of four such conventional motors is relatively bulky because there is a relatively large space in the center of the motor arrangement which is not used. In some applications, for example as rudder motors in missiles etc., the motor arrangement occupies an inadvantageously large part of the space.

Torque motors of the kind set forth have a torque which is linearly dependent on the length of the rotor stator unit and approximately related to the square of its diameter. In this connection a motor constant $K_M$ may be defined as:

$$K_M = T_p/p_p^{1/2}$$

where $T_p$ is the peak torque and $p_p$ peak power input at stall condition.

The object of the invention is to provide a compact symmetrical motor arrangement which in an optimal way as regards the torque value and the motor constant value utilizes the available volume.

According to the invention the object is obtained by a motor arrangement characterized in that the stators of the motors have the form of a hollow frustrum of a cone, and the motors are arranged with the narrowest part facing the point of intersection of the axes, the cross-sections of the motors joining in said plane.

The defined rotary symmetrical form implies that the volume of the stator unit may be substantially increased and that the surface of the air gap may be considerably enlarged compared to previously known arrangements. From this follows that the motors obtain a higher motor constant $K_M$.

It is to be noted, that electric motors comprising conical rotors and stators are known *per se* from EP—A 0046310. However that EP application does not teach anything about motor arrangements.

According to a favourable embodiment of the invention the magnetic poles of adjacent stators, which have poles in the said plane, are integrated, so that the poles are shared by two adjacent stators. As a consequence the rotor diameters may be increased to provide the motors with a larger torque.

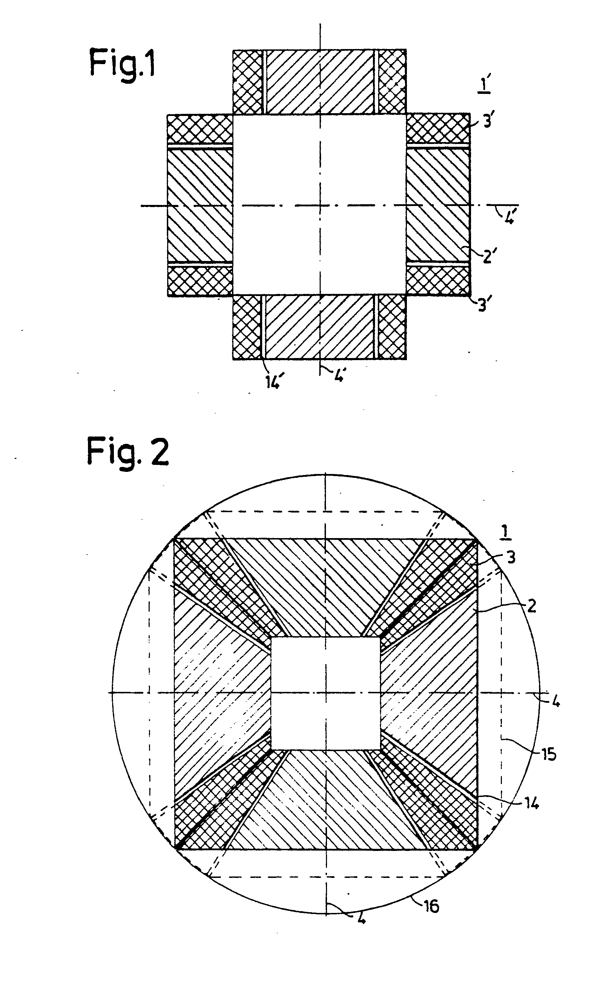

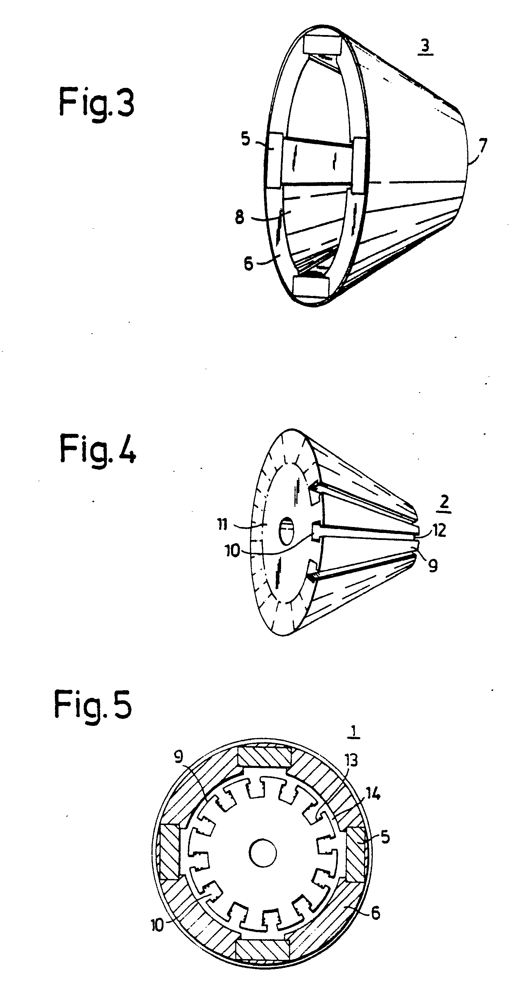

The invention will now be described in more detail with reference to the accompanying drawing, in which Fig. 1 shows a cross section coinciding with the plane of the rotation axes, of a prior art arrangement, Fig. 2 shows the same cross section as in Fig. 1 of a motor arrangement according to the invention, Fig. 3 schematically shows a perspective view of the stator comprised in a motor of the motor arrangement of the invention, viewed in perspective, Fig. 4 schematically shows the rotor comprised in the motor of the motor arrangement according to the invention, viewed in perspective, and Fig. 5 shows a cross section of an assembled stator and rotor, the area being parallel with the end surfaces of the rotor and the stator.

According to the previously known embodiment shown in Fig. 1 four conventional torque motors 1' are arranged with their axes of rotation 4' in one and the same plane. The motors 1' are arranged in pairs so that the axes of rotation 4' of two motors in their prolongation coincide and so that axes of rotation 4' that do not coincide in their prolongation are mutually rotated 90°. In order to obtain a symmetrical motor arrangement the distance between the two motors, having in their prolongation coinciding axes of rotation, must as is apparent from Fig. 1 be at least equal to the diameters of the motors 1'. Each motor 1' comprises a cylinder-shaped rotor 2' and a hollow cylinder-shaped stator 3' adapted thereto. An air gap 14' is present between the rotor 2' and the stator 3'. Thus, such an arrangement is rather bulky.

The Fig. 2—5 show an embodiment of the motor and the motor arrangement according to the invention in which corresponding parts have the same reference numbers but without a prime sign.

According to the embodiment the motor arrangement comprises four electric motors 1 with their axes of rotation 4 situated in one and the same plane and rotated relative to each other as in the previously known arrangement. Each motor 1 comprises a rotor 2 and a stator 3. The rotors have a rotary symmetrical form similar to a frustrum of a cone and are arranged with the multilated end facing the center of the motor arrangement. The stators 3 consist of rotary symmetrical bodies with a form similar to a hollow frustrum of a cone and are adapted to the rotors 2. The conical shape of the rotors 2 and the stators 3 and thereby the motors 1 themselves enables a very small distance between two opposite motors, because the minimum distance substantially is determined by the diameter at the mutilated end surface 7 of the stator 3. In order to utilize the available space at a maximum the conical stator should have a conical top angle of about 90°, i.e. a conicity of about 45°. If the motor arrangement is arranged in a space with a circular section, which is the case in missile applications, the surface of the air gaps of the motors can be further increased by extending the rotors 2 and stators 3 at the larger end surface 11, 8. Thus the air gap 14 can be given an extension almost to a circle 16 that circumscribes the motor arrangement. The extension of the rotors and the stators has been indicated by broken lines 15 in Fig. 2.

The conical four pole stator 3, shown in Fig. 3 and 5, comprises four permanent magnetical areas 5 extending from one end surface 7 to the other 8 and four therebetween situated areas of soft magnetical material 6 such as steel in solid or laminated form. The permanent magnetical areas suitably consist of alnico or rare earths. Although the stator is shown in a four-pole embodiment the number of poles can be chosen arbitrarily. Further, magnetical poles being a tangent to each other can be integrated. The four-pole stator shown may, for example, share two of its poles with adjacent stators.

The rotor, schematically shown in Fig. 4, comprises a conical body 9 having winding grooves, and preferably consists of a laminate. Only three of the winding grooves 10 are shown in the Fig. 4, while the other grooves have been indicated with broken lines. The winding grooves 10 extend from one end surface 11 of the conical body to the other end surface 12. The winding grooves 10 are provided with windings 13, shown in Fig. 5, which windings preferably consist of copper, the windings being wound between the end surfaces 11, 12 of the rotor. Besides, some of the windings can be shortened and wound along the part of the winding grooves being situated immediately adjacent to the larger one 11 of the two end surfaces.

The rotor can, if required, be provided with a commutator of a conventional brush type or an electronic commutator. An eventual commutator may suitably be arranged at one of the end surfaces 11, 12 of the rotor.

The motors can be direct current (D.C.) motors and/or alternating current (A.C.) motors and the windings can be provided on the rotor, as shown in Fig. 4, or alternatively on the stator, the rotor having then instead permanent magnets.

**Claims**

1. A motor arrangement comprising four electric motors, each comprising a stator having a substantially rotary symmetrical body and a rotor, the axes of rotation of the motors being substantially arranged in a common plane and being so mutually positioned that the motors are arranged in two pairs, with the axes of the motors in each pair being colinear and the axes of the two pairs intersecting each other at right angles, characterized in that

— the stators of the motors have the form of a hollow frustrum of a cone, and
— the motors are arranged with the narrowest part facing the point of intersection of the axes, the cross-sections of the motors joining in said plane.

2. A motor arrangement as claimed in Claim 1, characterized in that magnetic poles of adjacent stators, which have poles in the said plane, are integrated, so that the poles are shared by two adjacent stators.

3. A motor arrangement as claimed in Claim 1, characterized in that the rotors of the motors have the form of a tapering substantially rotary symmetrical body, preferably a frustrum of a cone, specially adapted to the stator.

4. A motor arrangement as claimed in Claim 3, characterized in that the air gap of the motors almost extend to a circle that circumscribes the motor arrangement.

5. A motor arrangement as claimed in any of the claims 1 to 4, characterized in that the rotors of the motors have turns of windings that only extend along a part of the length of the rotor.

6. Use of a motor arrangement as claimed in any of the preceding claims in missiles in order to independently control rudders arranged on the missile.

**Patentansprüche**

1. Motoranordnung mit vier Elektromotoren mit je einem Ständer mit einem im wesentlichen rotationssymmetrischen Körper und mit einem Läufer, wobei die Rotationsachsen der Motoren im wesentlichen in einer gemeinsamen Ebene liegen und derart gegenüber einander angeordnet sind, dass die Motoren in zwei Paaren angeordnet sind, wobei die Achsen der Motoren in jedem Paar kolinear sind und die Achsen der zwei Paare sich in geraden Winkeln Schneiden, dadurch gekennzeichnet, dass

— die Ständer der Motoren die Form eines hohlen Kegelstumpfes haben und
— die Motoren mit dem engsten Teil zu dem Schnittpunkt der Achsen gerichtet angeordnet sind, wobei die Schnitte durch die Motoren in der genannten Ebene zusammentreffen.

2. Motoranordnung nach Anspruch 1, dadurch gekennzeichnet, dass die Magnetpole benachbarter Ständer, die Pole in derselben Ebene haben, integriert sind, so dass die Pole von zwei benachbarten Pole gemeinsam benutzt werden.

3. Motoranordnung nach Anspruch 1, dadurch gekennzeichnet, dass die Läufer der Motoren die Form eines kegelförmigen im wesentlichen rotationssymmetrischen Körpers, vorzugsweise die Form eines Kegelstumpfes haben, der speziell an den Ständer angepasst ist.

4. Motoranordnung nach Anspruch 3, dadurch gekennzeichnet, dass der Luftspalt der Motoren sich zu einem die Motoranordnung umschreibenden Kreis erstreckt.

5. Motoranordnung nach einem der Ansprüche, dadurch gekennzeichnet, dass die Läufer der Motoren Windungen von Wicklungen aufweisen, die sich nur längs eines Teils der Länge des Läufers erstrecken.

6. Verwendung einer Motoranordnung nach einem der vorstehenden Ansprüche in Flugkörpern zur unabhängigen Steuerung von Seitenrudern auf dem Flugkörper.

**Revendications**

1. Agencement de moteurs comprenant quatre moteurs électriques qui comportent chacun un stator muni d'un corps sensiblement à symétrie de rotation et un rotor, les axes de rotation des moteurs étant disposés sensiblement dans un plan commun et étant positionnés les uns par rapport aux autres de façon que les moteurs sont disposés par deux paires, les axes des moteurs de chaque paire étant colinéaires et les axes des deux paires se coupant à angle droit, caractérisé en ce que

— les stators des moteurs ont la forme d'un tronc creux de cône et
— les moteurs sont disposés de façon que leur partie la plus étroite soit située face au point d'intersection des axes, les sections transversales des moteurs se joignant dans ledit plan.

2. Agencement de moteurs selon la revendication 1, caractérisé en ce que les pôles magnétiques de stators voisins ayant des pôles situés dans ledit plan, sont intégrés, de sorte que les pôles sont communs à deux stators voisins.

3. Agencement de moteurs selon la revendication 1, caractérisé en ce que les rotors des moteurs ont la forme d'un corps conique sensiblement à symétrie de rotation, de préférence un tronc de cône, spécialement adapté au stator.

4. Agencement de moteurs selon la revendication 3, caractérisé en ce que l'entrefer des moteurs s'étend à peu près jusqu'à un cercle circonscrit à l'agencement de moteurs.

5. Agencement de moteurs selon l'une quelconque des revendications 1 à 4, caractérisé en ce que les rotors des moteurs ont des spires d'enroulements qui ne s'étendent que sur une partie de la longueur du rotor.

6. Application d'un agencement de moteurs selon l'une quelconque des revendications précédentes à des missiles pour commander indépendamment des gouvernails disposés sur le missile.

Fig.1

Fig. 2

Fig.3

Fig.4

Fig.5